# EUROPÄISCHE PATENTANMELDUNG

(11) **EP 2 642 359 A1**
(43) Veröffentlichungstag der Anmeldung: **25.09.2013**
(21) Anmeldenummer: 12160249.4
(22) Anmeldetag: 20.03.2012
(51) Int. Cl.: G05B 19/042, G06F 9/44, G06F 3/048, B60R 16/023

(54) **Entwicklungseinrichtung und Verfahren zum Erstellen eines Steuergeräteprogramms**

(71) Anmelder: dSPACE digital signal processing and control engineering GmbH, 33102 Paderborn (DE)
(72) Erfinder: Eschmann, Mario, 33154 Salzkotten (DE); Viktor, Nesterow, 33098 Paderborn (DE); Deutenberg, Gernot, 33607 Bielefeld (DE)

(57) **Zusammenfassung**

Die Erfindung betrifft eine Entwicklungseinrichtung zum Erstellen eines Steuergeräteprogramms, bei welcher ein Steuergeräteprogramm zur Steuerung einer elektronischen Steuerungseinheit in einem Fahrzeug ausgebildet ist. Die Entwicklungseinrichtung umfasst eine elektronische Recheneinheit, welche ausgebildet ist, das Steuergeräteprogramm zu erzeugen. Die Entwicklungseinrichtung umfasst ferner eine der elektronischen Recheneinheit zugeordnete Bedieneinheit sowie eine der elektronischen Recheneinheit zugeordnete Anzeigeeinheit. Die Anzeigeeinheit umfasst einen ersten Anzeigebereich und einen zweiten Anzeigebereich. Zumindest ein Erstellungsprozessschritt ist mittels der Entwicklungseinrichtung ausführbar.

## Beschreibung

Die Erfindung betrifft eine Entwicklungseinrichtung sowie ein Verfahren zum Erstellen eines Steuergeräteprogramms, bei denen das Steuergerätprogramm zur Steuerung einer elektronischen Steuerungseinheit in einem Fahrzeug ausgebildet ist.

Der Begriff Entwicklungseinrichtung kann im Rahmen der vorliegenden Erfindung verstanden werden als Einrichtung, mittels derer ein Anwender, d.h. beispielsweise ein Benutzer der Entwicklungseinrichtung, ein Steuergeräteprogramm entwickeln, modellieren und erstellen kann. Das erstellte Steuergeräteprogramm kann dann zur Simulation und/oder zum Testen verwendet werden. Der Begriff Steuergeräteprogramm kann im Rahmen der vorliegenden Erfindung verstanden werden als Mess-, Steuer-, Regel- und/oder Kalibrierungsprogramm zur Steuerung einer elektronischen Steuerungseinheit in einem Fahrzeug. Unter den Begriff Steuergeräteprogramm können sowohl einzelne Softwarekomponenten mit unterschiedlichen Funktionen sowie komplexe Software-Architekturen mit mehreren, miteinander verbundenen Software-Komponenten fallen. Der Begriff elektronische Steuerungseinheit kann im Rahmen der vorliegenden Erfindung verstanden werden als ein Steuerungssystem, beispielsweise ein Steuergerät in einem Kraftfahrzeug. Die elektronische Steuerungseinheit kann dabei beispielsweise zum Messen, Steuern, Regeln und/oder Kalibrieren von Fahrzeugkomponenten dienen. Der Begriff Fahrzeug wird im Folgenden als umfassende Bezeichnung für Wasserfahrzeuge, Landfahrzeuge, Luftfahrzeuge, Raumfahrzeuge und/oder Kombinationen davon verwendet.

### HINTERGRUND

Entwicklungseinrichtungen sowie Verfahren zum Erstellen von Steuergeräteprogrammen der eingangs genannten Art sind aus dem Stand der Technik grundsätzlich bekannt. Sie dienen einem Anwender in der Regel als Entwicklungswerkzeug zum Erstellen, Entwickeln, Testen, Simulieren und/oder Kalibrieren von Steuergeräteprogrammen, beispielsweise für ein reales Steuergerät oder aber einer virtuellen elektronischen Steuerungseinheit (V-ECU: Virtual Electronic Control Unit) und/oder einer virtuellen Verarbeitungseinheit (VPU: Virtual Processing Unit).

Eine V-ECU ist ein virtuelles Steuergerät, d.h. eine Steuergeräte-Software ohne direkten Hardware-Bezug, die in einen Simulator integriert wird, um das Verhalten eines realen Steuergerätes zu simulieren. V-ECUs können im Rahmen einer Offline- oder Echtzeitsimulation genutzt werden. V-ECUs nutzen Schnittstellen der Simulator-Backplane, um mit anderen Steuergeräten, Streckenmodellen oder IO-Treibern zu kommunizieren. In der Wahrnehmung des Anwenders steht die V-ECU oft stellvertretend für seine gesamte ECU, inkl. aller Treibermodule. Im technischen Sinne umfasst die V-ECU aber nur den Teil der Software oberhalb der Backplane-Schnittstelle, da die tieferliegenden Softwareschichten durch Backplane-Module des konkreten Simulators ersetzt werden. Zur Laufzeit wird die V-ECU mit Hilfe eines VPU-Integration-Codes in einen Rahmen (VPU) eingebettet, um daraus einen ausführbaren Simulator-Prozess zu machen.

Eine VPU ist eine virtuelle Ausführungseinheit innerhalb des Simulators, auf der eine zu simulierende Anwendung ausgeführt wird. Eine VPU besitzt eigene zugeteilte virtuelle Rechenressourcen (Core), virtuellen Speicher (RAM), und virtuelle Timer. Diese Ressourcen sind unabhängig von anderen VPUs, so dass die VPUs quasi-parallel simuliert werden. Ebenso besitzt die VPU einen eigenständigen Satz von OS-Ressourcen (Tasks, Counter, Alarme, Events, Critical Sections, ...). Die Nutzung von IO-Treibern und die Kommunikation mit anderen VPUs geschieht über Dienste der Backplane. In einem Echtzeitsystem werden VPUs meist auf einem eigenen physikalischen Core ausgeführt. In einer Offline Simulation geschieht die Zuteilung der VPUs auf Cores dynamisch durch das zugrundeliegende Betriebssystem des Simulation Environments (Windows).

Eine beispielhafte Entwicklungseinrichtung der eingangs genannten Art ist der Produktbeschreibung zu SystemDesk 3.1 (http://www.dspace.de/de/gmb/home/products/sw/system_architecture software/systemd esk.cfm) zu entnehmen. SystemDesk ist ein Werkzeug zur Unterstützung der Entwicklung von verteilten elektronischen Systemen. SystemDesk ist insbesondere dazu ausgebildet, Steuergeräteprogramme zu erstellen, welche im Rahmen des sogenannten AUTOSAR-Standards (Automotive Open System Architecture) verwendet werden können.

Die bisher bekannten Entwicklungseinrichtungen stellen einem Anwender in der Regel eine Bedienoberfläche für die Entwicklungseinrichtung zur Verfügung, mittels derer ein Modell bzw. eine Architektur des Steuergeräteprogramms graphisch, beispielsweise in Form einer Baumstruktur mit mehreren Softwarekomponenten, wiedergegeben wird und bearbeitet werden kann. Mit wachsender Komplexität heutiger Steuergeräteprogramme und deren Modellen bzw. Architekturen wächst auch die Komplexität der zu verwendenden Entwicklungseinrichtungen zum Erstellen derartiger Steuergeräteprogramme. Dazu müssen Steuergeräteprogramme beispielsweise auf mehreren Abstraktionsebenen bzw. in mehreren Schichten modelliert werden. Dadurch vervielfacht sich zudem die Anzahl der graphischen Darstellungen, die zur Wiedergabe einzelner Softwarekomponenten oder der Architektur des Steuergeräteprogramms notwendig sind. Insbesondere bei der Aktualisierung eines bereits vorhandenen Steuergeräteprogramms, beispielsweise wenn einzelne Softwarekomponenten in der Architektur ausgetauscht oder aktualisiert werden sollen, ist eine vereinfachte Bedienoberfläche wünschenswert.

### DIE ERFINDUNG IM ÜBERBLICK

Es ist daher Aufgabe der Erfindung, eine verbesserte Entwicklungseinrichtung und ein verbessertes Verfahren zum Erstellen eines Steuergeräteprogramms, insbesondere einen übersichtlichen Zugang für einen Anwender zu einem komplexen Modell eines Steuergeräteprogramms, bereitzustellen.

Diese Aufgabe wird gelöst durch eine Entwicklungseinrichtung der eingangs genannten Art mit einer elektronischen Recheneinheit, welche ausgebildet ist, das Steuergeräteprogramm zu erzeugen, mit einer der elektronischen Recheneinheit zugeordneten Bedieneinheit und mit einer der elektronischen Recheneinheit zugeordneten Anzeigeeinheit, wobei die Anzeigeeinheit umfasst: einen ersten Anzeigebereich, in dem die Anzeigeeinheit einen Erstellungsprozess des Steuergeräteprogramms in Form eines Ablaufdiagramms graphisch wiedergibt, wobei das Ablaufdiagramm einen oder mehrere im Erstellungsprozess aufeinanderfolgende Erstellungsprozessschritte umfasst, welche mittels der Bedieneinheit anwählbar sind, und einen zweiten Anzeigebereich, in dem die Anzeigeeinheit zumindest Elemente eines Modells des Steuergeräteprogramms graphisch wiedergibt, welches einem angewählten Erstellungsprozessschritt zugeordnet ist, wobei zumindest ein Erstellungsprozessschritt mittels der Entwicklungseinrichtung ausführbar ist.

Der Erfindung liegt die Erkenntnis zugrunde, dass die Komplexität heutiger Steuergeräteprogramme, insbesondere aber auch der Modelle derartiger Steuergeräteprogramme, stetig zunimmt. Zudem sind eine Vielzahl von Anwendern an der Entwicklung und Erstellung eines Steuergeräteprogramms beteiligt. Einzelne Anwender befassen sich häufig lediglich mit Teilen bzw. Komponenten des Modells bzw. der Architektur des Steuergeräteprogramms. Häufig ist es dabei Aufgabe eines Anwenders einer Entwicklungseinrichtung, eine Komponente der Architektur des Steuergeräteprogramms zu bearbeiten, konfigurieren, aktualisieren und/oder erstellen. Beispielsweise ist es bei einer Vielzahl von einzelnen Anwendern somit bisher zeitaufwändig und schwierig, eine Teilaufgabe von einem einzelnen Anwender durchführen zu lassen. Häufig ist es dabei notwendig, dass jeder einzelne Anwender die gesamte Architektur des Steuergeräteprogramms kognitiv erfasst. Dies ist zeitaufwendig und aufwendige Schulungen der Anwender sind häufig notwendig.

Ein wesentlicher Vorteil der Erfindung besteht darin, dass einem Anwender ein einfach verständlicher und übersichtlicher Zugang zu der komplexen Architektur eines Steuergeräteprogramms in Form einer kompakten und für den Anwender nachvollziehbaren Strukturierung bereitgestellt wird. Dadurch können Steuergeräteprogramme der eingangs genannten Art auch von Anwendergruppen erstellt, konfiguriert und daraufhin simuliert und getestet werden, die mit den dabei notwendigen Abläufen und Erstellungsschritten nur in geringem Maße vertraut sind. Damit wird der Anwender bei der Umsetzung seiner Aufgaben, insbesondere bei der Erstellung eines Steuergeräteprogramms unterstützt. Gleichzeitig wird einem Anwender eine Kombination von Darstellungs-, Zugriffs- und Eingriffsmöglichkeiten für einen Ablauf von Erstellungsprozessschritten bereitgestellt.

Eine elektronische Recheneinheit kann im Rahmen der vorliegenden Erfindung verstanden werden als Komponente eines Computersystem, beispielsweise Personal Computer (PC) oder Workstation. Die elektronische Recheneinheit kann dabei beispielsweise ein Programm ausführen, so dass das Computersystem als Entwicklungseinrichtung zum Erstellen eines Steuergeräteprogramms ausgebildet ist. Die Bedieneinheit, welche der elektronischen Recheneinheit zugeordnet ist, kann beispielsweise als Tastatur und/oder Maus des Computers ausgeführt sein. Die Anzeigeeinheit, welche der elektronischen Recheneinheit zugeordnet ist, kann beispielsweise als Monitor bzw. Bildschirm des Computers ausgeführt sein. Dazu können die Bedieneinheit und die Anzeigeeinheit jeweils drahtlos oder mittels einer Verbindungsleitung, z.B. Systembus, an die elektronische Recheneinheit gekoppelt sein.

Der erste Anzeigebereich der Anzeigeeinheit kann beispielsweise als rechteckiger Teilbereich des gesamten Anzeigebereichs der Anzeigeeinheit ausgeführt sein. In dem Anzeigebereich wird der Erstellungsprozess des Steuergeräteprogramms als Ablaufdiagramm graphisch dargestellt. Die im Erstellungsprozess aufeinanderfolgenden Erstellungsprozessschritte können beispielsweise als Blockelemente in Betrachtungsrichtung gesehen übereinander angeordnet dargestellt werden. Dabei kann der im Erstellungsprozess zuerst erfolgende Erstellungsprozessschritt an oberster Stelle angezeigt werden. Die auf den ersten Erstellungsprozessschritt folgenden Erstellungsprozessschritte können dann nach unten aufeinanderfolgend, d.h. unterhalb des ersten Erstellungsprozessschrittes, graphisch angeordnet sein. Verbindungslinien oder Verbindungspfeile können dabei zwischen den Blockelementen dargestellt sein, um einem Anwender die Reihenfolge der Erstellungsprozessschritte zu verdeutlichen.

Der zweite Anzeigebereich der Anzeigeeinheit kann ebenfalls als rechteckiger Teilbereich des gesamten Anzeigebereichs der Anzeigeeinheit dargestellt sein. In dem Anzeigebereich werden Elemente des Modells bzw. der Architektur des Steuergeräteprogramms graphisch dargestellt. Diese Elemente können auf unterschiedliche Art und Weise graphisch wiedergegeben werden, beispielsweise je nach Kategorie oder Art des Elementes in unterschiedlicher Form, Farbe, Helligkeit und/oder mit unterschiedlicher Textur. Die Erstellungsprozessschritte sind beispielsweise mittels der Bedieneinheit anwählbar, was dazu führt, dass in dem zweiten Anzeigebereich Elemente des Modells des Steuergeräteprogramms wiedergegeben werden, die dem angewählten Erstellungsprozessschritt zugeordnet sind.

Mittels der Bedieneinheit kann ein Anwender einen oder mehrere Erstellungsprozessschritte anwählen und zudem ausführen. Dies führt beispielsweise dazu, dass Elemente des Modells des Steuergeräteprogramms erstellt oder aktualisiert werden.

Die Anzeigebereiche können in Betrachtungsrichtung gesehen nebeneinander angeordnet sein. Beispielsweise kann der erste Anzeigebereich links neben dem zweiten Anzeigebereich wiedergegeben werden. Bei jeweils rechteckigen Anzeigebereichen kann damit eine rechteckige Gesamtansicht von zwei nebeneinander angeordneten Anzeigebereichen geschaffen werden. Dadurch wird einem Anwender eine übersichtliche Orientierung hinsichtlich des Ablaufes eines Erstellungsprozesses bereitgestellt. Im ersten Anzeigebereich (links) kann der Erstellungsprozess beispielsweise als Kette von Blöcken, die jeweils einen Erstellungsprozessschritt repräsentieren, dargestellt sein. Diese Darstellung ermöglicht dem Anwender die Orientierung und einen gezielten Zugriff auf relevante Teilinformationen bzw. -funktionen.

Wird ein Erstellungsprozessschritt, beispielsweise in Form eines Blocks im Ablaufdiagramm, angewählt, werden im zweiten Anzeigebereich die Elemente des Modells des Steuergeräteprogramms dargestellt, die dem angewählten Erstellungsprozessschritt zugeordnet sind. Dies können Elemente sein, die beispielsweise während des Erstellungsprozessschrittes verändert, bearbeitet, aktualisiert werden oder als Konfigurationsparameter dienen. Der Begriff Elemente eines Modells des Steuergeräteprogramms kann im Rahmen der vorliegenden Erfindung somit wie folgt verstanden werden: Bevor das Steuergeräteprogramm erstellt wird, liegt es in Form eines Modells in der Entwicklungseinrichtung vor. Dieses Modell enthält mehrere unterschiedliche Komponenten (Elemente) wie beispielsweise Softwarekomponenten, Konfigurationsparameter, etc.. Bei der Erstellung wird aus den Elementen des Modells bzw. unter Berücksichtigung dieser das Steuergeräteprogramm erzeugt.

Die Zuordnung der Elemente zu einem Erstellungsprozessschritt wird beispielsweise bei der Definition und dem Zuschnitt des Erstellungsprozessschrittes festgelegt. Die Elemente können entweder einzeln oder als Gruppen gleichartiger Elemente in einem Ordner dargestellt werden. Bevorzugt können die Elemente in einer hierarchischen Architektur als Parent-Element mit einer Menge von Child-Elementen dargestellt werden.

Gemäß einer vorteilhaften Ausführungsform der erfindungsgemäßen Entwicklungseinrichtung wird ein Element, insbesondere ein ausgewähltes Element, welches einem Erstellungsprozessschritt zugeordnet ist, beim Ausführen des Erstellungsprozessschrittes geändert, insbesondere aktualisiert. Durch Auswählen eines Elements wird dem Anwender somit eine Filterfunktionalität gegeben. Das Auswählen kann beispielsweise dadurch erfolgen, dass der Anwender mittels der Bedieneinheit an einem dem Element zugeordneten Kästchen ein graphisches Häkchen setzt. Wählt der Anwender ein Element aus und wird ein Erstellungsprozessschritt, dem das Element zugeordnet ist, ausgeführt, so führt dies dazu, dass lediglich das ausgewählte Element während des Erstellungsprozessschrittes geändert bzw. aktualisiert wird. Neben der Filterfunktionalität wird zudem ermöglicht, dass Teilaufgaben eines komplexen und zeitaufwändigen Erstellungsprozesses effizient ausgeführt werden können, indem lediglich die ausgewählten Elemente eines Erstellungsprozessschrittes beim Ausführen dieses Erstellungsprozessschrittes geändert bzw. aktualisiert werden. Dadurch kann die Gesamtrechenleistung bei der Erstellung eines Steuergeräteprogramms eingespart werden.

Gemäß einer weiteren vorteilhaften Ausführungsform der erfindungsgemäßen Entwicklungseinrichtung wird ein angewählter Erstellungsprozessschritt optisch hervorgehoben, insbesondere in optischer Abgrenzung zu einem nicht-angewählten Erstellungsprozessschritt. Das optische Hervorheben eines angewählten Erstellungsprozessschrittes kann dadurch erfolgen, dass der Erstellungsprozessschritt in einer Farbe, einem Kontrast und/oder mit einer Textur angezeigt wird, die sich von Farbe, Kontrast und/oder Textur der nicht-angewählten Erstellungsprozessschritte unterscheiden. Zudem kann das optische Hervorheben eines angewählten Erstellungsprozessschrittes erfolgen, indem der angewählte Erstellungsprozessschritt animiert wird, d.h. die Farbe, der Kontrast und/oder die Textur des angewählten Erstellungsprozessschrittes zeitlich variieren.

Desweiteren kann eine erfolgte bzw. abgeschlossene Ausführung eines Erstellungsprozessschrittes graphisch wiedergegeben werden, so dass dem Anwender der Erfolg des Ausführens des Erstellungsprozessschrittes vermittelt wird.

In einer weiteren zweckmäßigen Ausführungsform der erfindungsgemäßen Entwicklungseinrichtung ist ein Element auswählbar, wobei das ausgewählte Element optisch hervorgehoben wird, insbesondere in Abgrenzung zu einem nicht-ausgewählten Element. Dadurch kann sich der Anwender schnell und einfach, selbst bei kursorischer Betrachtung des zweiten Anzeigebereiches, einen Überblick über die ausgewählten Elemente verschaffen. Das optische Hervorheben eines Elements kann ähnlich zu dem optischen Hervorheben eines Erstellungsprozessschrittes, insbesondere durch einen geänderten Kontrast, eine geänderte Farbe und/oder eine geänderte Textur im Vergleich zu den nicht-ausgewählten Elementen, erfolgen.

Ähnlich zu dem optischen Hervorheben eines ausgeführten Erstellungsprozessschrittes kann das Ändern bzw. Aktualisieren eines Elements optisch hervorgehoben, beispielsweise animiert werden.

Nach einer anderen vorteilhaften Ausführungsform einer erfindungsgemäßen Entwicklungseinrichtung umfasst das Element eine Applikations-Softwarekomponente und/oder ein Basissoftware-Modul und/oder eine VPU.

Der Begriff Applikations-Softwarekomponente (Application Software Component) ist im Rahmen der vorliegenden Erfindung zu verstehen als Softwarekomponente, welche eine definierte Funktionalität auf dem Applikationslevel definiert und eine AUTOSAR-Infrastruktur betreibt. Dabei kann der Begriff Softwarekomponente (SW-C: Software Component) als Element des Modells bzw. der Architektur verstanden werden, welches Schnittstellen zu anderen Softwarekomponenten bereitstellt und/oder benötigt und mit anderen Softwarekomponenten durch diese Schnittstellen verbunden ist. Der Begriff Softwaremodul kann im Rahmen der vorliegenden Erfindung als Ansammlung von Softwaredateien, d.h. Quelltext und Beschreibung, die eine bestimmte Softwarefunktionalität auf einer elektronischen Steuerungseinheit vorsehen, verstanden werden. Der Begriff Basissoftware-Modul kann im Rahmen der vorliegenden Erfindung verstanden werden als Ansammlung von Softwaredateien, die eine bestimmte Basissoftwarefunktionalität auf einer elektronischen Steuerungseinheit vorsehen.

Gemäß einer weiteren vorteilhaften Ausführungsform einer erfindungsgemäßen Entwicklungseinrichtung ist einem Erstellungsprozessschritt ein Kontextmenü mit einer oder mehreren anwählbaren Optionen zur Bearbeitung des Erstellungsprozessschrittes zugeordnet, wobei das Kontextmenü vorzugsweise von der Anzeigeeinheit optisch wiedergegeben wird. Mittels des Kontextmenüs werden dem Anwender verschiedene Möglichkeiten zum Bearbeiten eines Erstellungsprozessschrittes gegeben. Beispielsweise kann mittels des Kontextmenüs eine Option zum Ausführen des Erstellungsprozessschrittes angezeigt werden. Desweiteren kann mittels des Kontextmenüs eine anwählbare Option zum Bearbeiten des Erstellungsprozessschrittes angezeigt werden.

Gemäß einer weiteren vorteilhaften Ausführungsform einer erfindungsgemäßen Entwicklungseinrichtung ist einem Element ein Kontextmenü mit einer oder mehreren anwählbaren Optionen zur Bearbeitung des Elements zugeordnet, wobei das Kontextmenü vorzugsweise von der Anzeigeeinheit optisch wiedergegeben wird. Das Kontextmenü kann dem Anwender mehrere anwählbare Optionen, beispielsweise zum Bearbeiten, Auswählen und/oder Editieren des Elements angeben.

Gemäß einer bevorzugten weiteren Ausführungsform der erfindungsgemäßen Entwicklungseinrichtung ist ein einzelner Erstellungsprozessschritt ausführbar. Dadurch kann beispielsweise ein einzelner Erstellungsprozessschritt angewählt und ausgeführt werden, ohne dass weitere Erstellungsprozessschritte, die im Erstellungsprozessverlauf auf den angewählten Erstellungsprozessschritt folgen, ausgeführt werden. Diese Ausführungsform stellt eine Filterfunktionalität bereit, die es insbesondere ermöglicht, Teilaufgaben im Gesamterstellungsprozess des Steuergeräteprogramms effizient und zeitsparend auszuführen. Der Begriff Erstellungsprozessverlauf ist im Rahmen der vorliegenden Erfindung insbesondere zu verstehen als Reihenfolge der Erstellungsprozessschritte im Erstellungsprozess.

Gemäß einer weiteren zweckmäßigen Ausführungsform einer erfindungsgemäßen Entwicklungseinrichtung ist ein Element, insbesondere mittels der Bedieneinheit, bearbeitbar. Beispielsweise kann der Anwender mittels des Kontextmenüs eine Option zum Bearbeiten des Elementes aufrufen. In diesem Fall kann dem Anwender eine Bearbeitungsumgebung, beispielsweise ein Editor, bereitgestellt und angezeigt werden, mittels dessen das Element editiert werden kann.

Nach einer anderen zweckmäßigen Ausführungsform einer erfindungsgemäßen Entwicklungseinrichtung weist diese ein anwählbares erstes Ausführelement, insbesondere ein von der Anzeigeeinheit optisch wiedergegebenes erstes Ausführfeld, auf, wobei ein Anwählen des ersten Ausführelements bewirkt, dass ein angewählter Erstellungsprozessschritt ausgeführt wird. Das Ausführelement kann in Form eines Ausführfeldes beispielsweise im ersten Anzeigebereich graphisch wiedergegeben werden. Dabei kann die Bedieneinheit, beispielsweise eine Computermaus, verwendet werden, um das Ausführelement anzuwählen, wodurch ein angewählter Erstellungsprozessschritt ausgeführt wird.

Nach einer weiteren zweckmäßigen Ausführungsform der erfindungsgemäßen Entwicklungseinrichtung sind mehrere im Erstellungsprozessverlauf aufeinanderfolgende Erstellungsprozessschritte ausführbar. Das Ausführen mehrerer Erstellungsprozessschritte kann beispielsweise automatisch durch Anwahl eines entsprechenden Ausführelements erfolgen. Dies ermöglicht dem Anwender, mehrere Erstellungsprozessschritte auszuführen, ohne jeweils ein Ausführen eines einzelnen Erstellungsprozessschrittes durch Anwählen eines entsprechenden Ausführelements mehrfach initiieren zu müssen.

Gemäß einer weiteren vorteilhaften Ausführungsform der erfindungsgemäßen Entwicklungseinrichtung weist diese ein anwählbares zweites Ausführelement auf, insbesondere ein von der Anzeigeeinheit optisch wiedergegebenes zweites Ausführfeld, wobei ein Anwählen des zweiten Ausführelements bewirkt, dass der angewählte Erstellungsprozessschritt und zumindest ein Erstellungsprozessschritt, welcher dem angewählten Erstellungsprozessschritt im Erstellungsprozessverlauf vorgeordnet ist, ausgeführt werden oder der angewählte Erstellungsprozessschritt und zumindest ein Erstellungsprozessschritt, welcher dem angewählten Erstellungsprozessschritt im Erstellungsprozessverlauf nachgeordnet ist, ausgeführt werden. Dadurch werden zwei besonders vorteilhafte Alternativen einer Filterfunktionalität beim Ausführen eines oder mehrerer Erstellungsprozessschritte erzielt. Bei der ersten Alternative werden beim Anwählen des zweiten Ausführelements all diejenigen Erstellungsprozessschritte ausgeführt, die einem angewählten Erstellungsprozessschritt im Erstellungsprozessverlauf vorgeordnet sind. Ein Anwender kann dazu beispielsweise zunächst einen Erstellungsprozessschritt anwählen und dann das zweite Ausführelement anwählen, so dass mehrere Erstellungsprozessschritte ausgeführt werden, nämlich die Erstellungsprozessschritte, welche im Erstellungsprozessverlauf dem angewählten Erstellungsprozessschritt vorgeordnet sind und der angewählte Erstellungsprozessschritt. Bei der zweiten Alternative wird durch Anwählen des zweiten Ausführfeldes zunächst der angewählte Erstellungsprozessschritt und darauffolgend die Erstellungsprozessschritte ausgeführt, welche dem angewählten Erstellungsprozessschritt im Erstellungsprozessverlauf nachgeordnet sind. Ein Anwender kann dazu zunächst einen Erstellungsprozessschritt anwählen und daraufhin das zweite Ausführfeld anwählen, was bewirkt, dass der anwählte Erstellungsprozessschritt und alle im Erstellungsprozessverlauf nachgeordneten Erstellungsprozessschritte ausgeführt werden. Dadurch werden für das Ausführen von Teilaufgaben besonders zweckmäßige Alternativen zum Ausführen eines Teilabschnitts des Erstellungsprozesses bereitgestellt. Gleichzeitig sind die beiden genannten Alternativen für einen Anwender besonders einfach ausführbar.

Gemäß einer weiteren zweckmäßigen Ausführungsform der erfindungsgemäßen Entwicklungseinrichtung wird ein Erstellungsprozessschritt beim Ausführen optisch hervorgehoben, insbesondere in optischer Abgrenzung zu einem nicht-ausgeführten Erstellungsprozessschritt. D.h. ein Erstellungsprozessschritt wird während des Ausführens optisch in Abgrenzung zu den nicht-ausgeführten Erstellungsprozessschritten, beispielsweise durch Animation des ausgeführten Erstellungsprozessschrittes, hervorgehoben. Das optische Hervorheben zeigt einem Anwender an, ob ein Erstellungsprozessschritt aktuell ausgeführt wird bzw. ob ein Ausführen eines Erstellungsprozessschrittes bereits abgeschlossen ist. Das optische Hervorheben des ausgeführten Erstellungsprozessschrittes kann beispielsweise mittels einer Animation erfolgen. Desweiteren kann das optische Hervorheben des Erstellungsprozessschrittes dadurch erfolgen, dass der Erstellungsprozessschritt im ersten Anzeigebereich eine Farbe, einen Kontrast und/oder eine Textur aufweist, die sich von Farbe, Kontrast und/oder Textur der nicht-ausgeführten Erstellungsprozessschritte unterscheiden.

Die eingangs genannte Aufgabe wird zudem gelöst durch ein Verfahren zum Erstellen eines Steuergeräteprogramms der eingangs genannten Art mit den Schritten:
- graphisches Wiedergeben eines Erstellungsprozesses eines Steuergeräteprogramms, wobei der Erstellungsprozess in Form eines Ablaufdiagramms in einem ersten Teilbereich einer Anzeigeeinheit graphisch wiedergegeben wird, wobei das Ablaufdiagramm einen oder mehrere im Erstellungsprozess aufeinanderfolgende Erstellungsprozessschritte umfasst, die mittels einer Bedieneinheit anwählbar sind,
- Anwählen eines graphisch wiedergegebenen Erstellungsprozessschrittes,
- graphisches Wiedergeben zumindest eines Elements eines Modells des Steuergeräteprogramms, welches dem angewählten Erstellungsprozessschritt zugeordnet ist, in einem zweiten Teilbereich der Anzeigeeinheit und
- Ausführen zumindest eines Erstellungsprozessschrittes.

Eine bevorzugte Ausführungsform des erfindungsgemäßen Verfahrens umfasst den Schritt: Aktualisieren eines ausgewählten, einem Erstellungsprozessschritt zugeordneten Elements beim Ausführen des Erstellungsprozessschrittes.

Eine weitere bevorzugte Ausführungsform des erfindungsgemäßen Verfahrens umfasst den Schritt: optisches Hervorheben eines angewählten Erstellungsprozessschrittes, insbesondere in optischer Abgrenzung zu einem nicht-angewählten Erstellungsprozessschritt.

Eine weitere vorteilhafte Ausführungsform des erfindungsgemäßen Verfahrens umfasst die Schritte:
- Auswählen eines Elements, insbesondere mittels der Bedieneinheit, und
- optisches Hervorheben eines ausgewählten Elements, insbesondere in optischer Abgrenzung zu einem nicht-ausgewählten Element.

Eine weitere vorteilhafte Ausführungsform des erfindungsgemäßen Verfahrens umfasst den Schritt: Ausführen eines einzelnen angewählten Erstellungsprozessschrittes.

Gemäß einer weiteren vorteilhaften Ausführungsform des erfindungsgemäßen Verfahrens erfolgt das Ausführen durch Anwählen eines ersten Ausführelements, insbesondere eines von der Anzeigeeinheit graphisch wiedergegebenen ersten Ausführfeldes.

Eine weitere zweckmäßige Ausführungsform des erfindungsgemäßen Verfahrens umfasst den Schritt:
- Ausführen mehrerer im Erstellungsprozessverlauf aufeinanderfolgender Erstellungsprozessschritte,
   o wobei ein angewählter Erstellungsprozessschritt und zumindest ein dem angewählten Erstellungsprozessschritt im Erstellungsprozessverlauf vorgeordneter Erstellungsprozessschritt ausgeführt wird oder
   o wobei ein angewählter Erstellungsprozessschritt und zumindest ein dem angewählten Erstellungsprozessschritt im Erstellungsprozessverlauf nachgeordneter Erstellungsprozessschritt ausgeführt wird.

Das erfindungsgemäße Verfahren und seine Fortbildungen weisen Merkmale bzw. Verfahrensschritte auf, die sie insbesondere dafür geeignet machen, für eine erfindungsgemäße Entwicklungseinrichtung und ihre Fortbildungen verwendet zu werden. Zu Vorteilen, Ausführungsvarianten und Ausführungsdetails dieses Verfahrens und der Verfahrensfortbildungen wird auch auf die vorangegangene Beschreibung zu den entsprechenden Einrichtungsmerkmalen verwiesen.

Die eingangs genannte Aufgabe wird zudem gelöst durch ein Computerprogramm mit Programmcode-Mitteln, die auf einem computerlesbaren Datenträger gespeichert sind, und die Entwicklungseinrichtung nach einem der vorstehend beschriebenen Ausführungsbeispiele zur Ausführung der Schritte des Verfahrens nach einem der vorstehend beschriebenen Ausführungsbeispiele veranlassen, wenn diese Programmcode-Mittel von der Recheneinheit der Entwicklungseinrichtung ausgeführt werden.

### BESCHREIBUNG DER ZEICHNUNGEN

Eine bevorzugte Ausführungsform der Erfindung wird beispielhaft anhand der beiliegenden Figuren beschrieben. Es zeigen:
- Figur 1:: eine erste Konfiguration eines bevorzugten Ausführungsbeispiels einer erfindungsgemäßen Entwicklungseinrichtung,
- Figur 2:: eine zweite Konfiguration des in Figur 1 gezeigten Ausführungsbeispiels einer erfindungsgemäßen Entwicklungseinrichtung,
- Figur 3:: eine dritte Konfiguration des in den Figuren 1 und 2 gezeigten Ausführungsbeispiels einer erfindungsgemäßen Entwicklungseinrichtung,
- Figur 4:: eine vierte Konfiguration des in den Figuren 1 bis 3 gezeigten Ausführungsbeispiels einer erfindungsgemäßen Entwicklungseinrichtung,
- Figur 5:: ein schematisches Ablaufdiagramm eines erfindungsgemäßen Verfahrens und
- Figur 6:: ein Blockdiagramm von Komponenten eines Computersystems.

### DETAILLIERTE BESCHREIBUNG

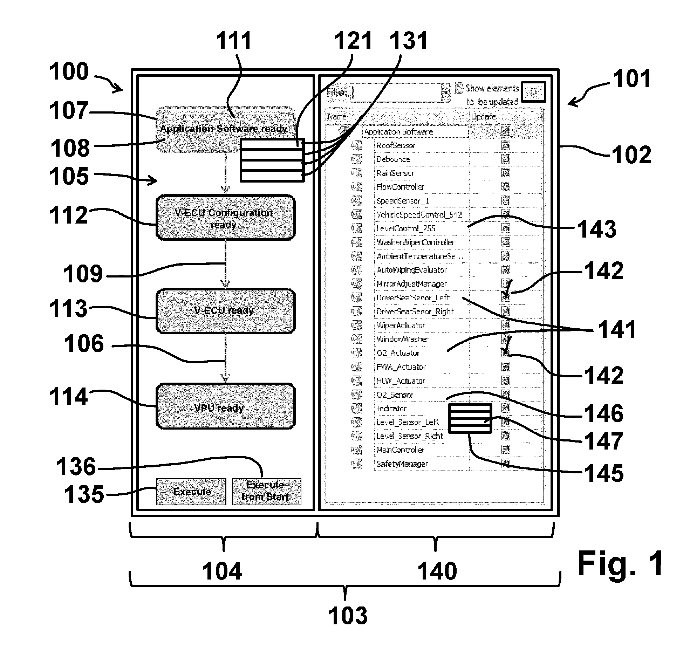

Die Figuren 1 bis 4 zeigen jeweils Konfigurationen 100, 200, 300, 400 eines bevorzugten Ausführungsbeispiels einer erfindungsgemäßen Entwicklungseinrichtung 101. Insbesondere zeigt Figur 1 einen Teilbereich 103 einer Anzeigeeinheit 102. Der Teilbereich 103 der Anzeigeeinheit 102 zeigt einen ersten Anzeigebereich 104, der einen linken rechteckigen Bereich des Teilbereichs 103 darstellt. In dem ersten Anzeigebereich 104 gibt die Anzeigeeinheit 102 einen Erstellungsprozess 105 eines Steuergeräteprogramms in Form eines Ablaufdiagramms 106 graphisch wieder. Das Ablaufdiagramm 106 setzt sich zusammen aus mehreren in Betrachtungsrichtung gesehen übereinander angeordneten Blöcken 107, welche jeweils einen Erstellungsprozessschritt 108 repräsentieren. Im Erstellungsprozess folgen die einzelnen Erstellungsprozessschritte 108 aufeinander. Dies wird graphisch von der Anzeigeeinheit 102 durch Verbindungslinien bzw. Verbindungspfeile 109 dargestellt, welche die Blöcke 107 miteinander verbinden.

Die einzelnen Erstellungsprozessschritte 108 sind mittels einer Bedieneinheit anwählbar. In der in Figur 1 gezeigten Konfiguration ist der ganz oben gezeigte Erstellungsprozessschritt 111 "Application Software Ready" optisch hervorgehoben, d.h. in optischer Abgrenzung zu den nicht-angewählten Erstellungsprozessschritten 112, 113, 114 dargestellt. Der Erstellungsprozessschritt 111 ist dabei optisch hervorgehoben, indem die Randlinie des Blockes 107 heller wiedergegeben wird als die Randlinien der übrigen Blöcke der Erstellungsprozessschritte 112, 113, 114.

Dem Erstellungsprozessschritt 111 ist ein Kontextmenü 121 zugeordnet, welches mittels der Bedieneinheit aufgerufen werden kann. Das Kontextmenü 121 zeigt mehrere anwählbare Optionen 131 zum Bearbeiten des Erstellungsprozessschrittes 111.

Ein anwählbares erstes Ausführfeld 135, welches als anwählbares erstes Ausführelement vorgesehen ist, kann mittels der Bedieneinheit angewählt werden. Wenn das Ausführfeld 135 angewählt wird, beispielsweise durch einen Mausklick oder Betätigen einer dafür vorgesehenen Taste, wird der angewählte Erstellungsprozessschritt 111 ausgeführt. D.h. alle Aktionen, welche zu diesem Erstellungsprozessschritt 111 innerhalb eines Erstellungsprozesses gehören, werden ausgeführt. Ein anwählbares zweites Ausführfeld 136, welches als anwählbares zweites Ausführelement vorgesehen ist, kann ebenso wie das erste Ausführfeld 135 mittels der Bedieneinheit angewählt werden. Wird das zweite Ausführfeld 136 angewählt, so werden der angewählte Erstellungsprozessschritt und alle dem angewählten Erstellungsprozessschritt im Erstellungsprozessverlauf vorgeordneten Erstellungsprozessschritte ausgeführt. Ist beispielsweise der Erstellungsprozessschritt 113 angewählt, wird auf ein Anwählen des zweiten Ausführfeldes 136 hin zunächst der Erstellungsprozessschritt 111, danach der Erstellungsprozessschritt 112 und abschließend der angewählte Erstellungsprozessschritt 113 ausgeführt.

Die Anzeigeeinheit 102 gibt in einem zweiten Anzeigebereich 140 mehrere Elemente 141 eines Modells eines Steuergeräteprogramms graphisch wieder. Der zweite Anzeigebereich 140 ist in Form eines rechteckigen Anzeigebereichs des Teilbereichs 103 dargestellt. Die Elemente 141 sind Elemente, welche einem im ersten Anzeigebereich 104 gezeigten und angewählten Erstellungsprozessschritt 111 zugeordnet sind. D.h. wenn ein in dem ersten Anzeigebereich 104 gezeigter Erstellungsprozessschritt 111 angewählt wird, werden in dem zweiten Anzeigebereich 140 Elemente 141 eines Modells des Steuergeräteprogramms graphisch wiedergegeben, die bei der Ausführung eines Erstellungsprozessschrittes bearbeitet werden bzw. an dem Erstellungsprozessschritt beteiligt sind, also dem Erstellungsprozessschritt zugeordnet sind.

Die Anzeigeeinheit 102 zeigt in dem zweiten Anzeigebereich 140 mehrere Kästchen 142, die jeweils einem Element 141 zugeordnet sind. Mittels der Bedieneinheit kann ein Kästchen 142 jeweils angewählt werden, d.h. beispielsweise ein Häkchen an dem Kästchen gesetzt werden, wodurch das Element 141, dem das Kästchen 142 zugeordnet ist, ausgewählt werden kann. Dadurch wird das ausgewählte Element 141 in Abgrenzung zu einem nicht-ausgewählten Element 143 optisch hervorgehoben. Die erfindungsgemäße Entwicklungseinrichtung 101 ist vorzugsweise derart ausgebildet, dass beim Ausführen eines Erstellungsprozessschrittes 111 lediglich die ausgewählten Elemente 141 geändert bzw. aktualisiert werden. Das Ausführen eines Erstellungsprozessschrittes 111 kann zudem optisch, beispielsweise durch eine Animation des Erstellungsprozessschrittes 111, in Abgrenzung zu den nicht-ausgeführten Erstellungsprozessschritten 112, 113, 114 angezeigt werden.

Mittels der Bedieneinheit kann ein Kontextmenü 145, welches beispielsweise einem Element 146 "O2_Actuator" zugeordnet ist, aufgerufen werden. Das Kontextmenü 145 zeigt mehrere anwählbare Optionen zur Bearbeitung des Elements 146 an. Beispielsweise kann das Kontextmenü 145 eine Option 147 zum Bearbeiten des Elements 146 anzeigen. Wenn diese Option 147 mittels der Bedieneinheit angewählt wird, kann beispielsweise ein Editor geöffnet werden, welcher zum Bearbeiten des Elements 146 ausgebildet ist.

Figur 1 zeigt insbesondere einen Erstellungsprozess, in dem ein Steuergeräteprogramm erstellt wird. Das Steuergeräteprogramm ist ausgebildet zur Steuerung einer elektronischen Steuerungseinheit in einem Fahrzeug. Dabei ist das Steuergeräteprogramm derart ausgebildet, dass es im Rahmen des sogenannten AUTOSAR-Standards verwendet werden kann. Die in Figur 1 gezeigte Konfiguration zeigt einen Erstellungsprozess 105, bei dem der angewählte Erstellungsprozessschritt 111 bezeichnet ist als "Application Software ready". Ist dieser Erstellungsprozessschritt 111 angewählt, so werden im zweiten Anzeigebereich 140 Softwarekomponenten angezeigt, die während des Erstellungsprozessschrittes 111 verwendet werden. Über das Kontextmenü 145 können zudem beispielsweise die Eigenschaften einer Softwarekomponente aufgerufen werden, d.h. zum Beispiel der Quellpfad der die Softwarekomponente repräsentierenden Quelldateien. Zudem können beispielsweise die Eigenschaften mehrerer ausgewählter Softwarekomponenten gleichzeitig aufgerufen werden.

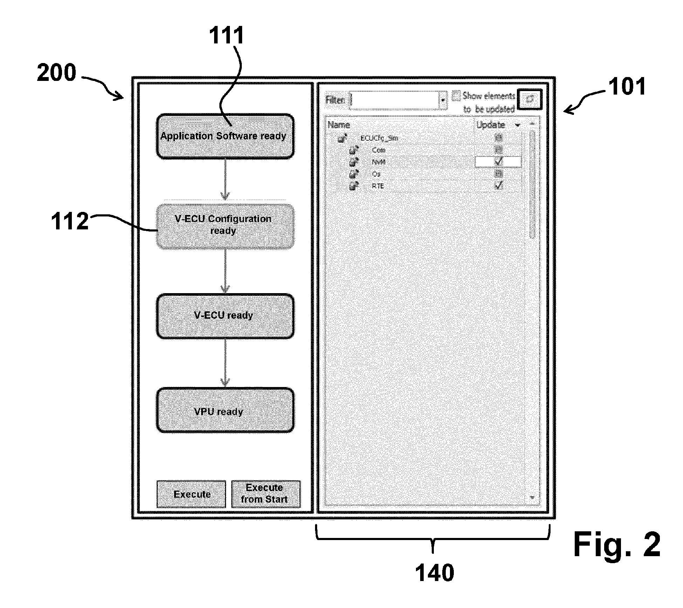

Figur 2 zeigt das in Figur 1 gezeigte und oben beschriebene Ausführungsbeispiel der erfindungsgemäßen Entwicklungseinrichtung 101 in einer zweiten Konfiguration 200. In dieser Konfiguration 200 ist der Erstellungsprozessschritt 112 mit der Bezeichnung "V-ECU Configuration ready" angewählt. Im zweiten Anzeigebereich 140 wird die Konfiguration des Steuergeräteprogramms mit zugeordneten Basissoftware-Modulen angezeigt. Beim Ausführen des Erstellungsprozessschrittes 112 werden die Basissoftware-Module für die weitere Verwendung erstellt, d.h. für jedes vorhandene Basissoftware-Modul können im Erstellungsprozessschritt 112 Konfigurationen vorgenommen werden. Die im zweiten Anzeigebereich 140 beispielhaft gezeigten Basissoftware-Module sind Communication (COM), Operating System (OS), Runtime Environment (RTE) und NVRAM Manager (NvM; NVRAM: Non-Volatile Random-Access Memory). Die RTE stellt eine Laufzeitumgebung zur Verfügung, mittels derer eine einheitliche Kommunikationsschicht für unterschiedlichen Funktionen untereinander angegeben wird. Der NvM stellt Dienste zur Verfügung, um Datenspeicherung und die Aufrechterhaltung von nicht-volatilen Daten gemäß ihren individuellen Vorgaben in einer Fahrzeugumgebung sicherzustellen (siehe auch AUTOSAR Specification of NVRAM Manager V3.1.0 R4.0 Rev2).

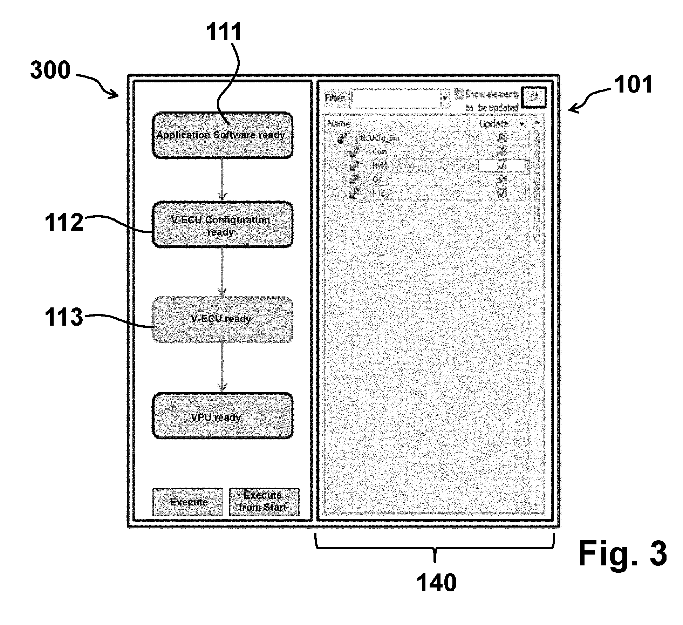

Figur 3 zeigt das in Figur 1 gezeigte und oben beschriebene Ausführungsbeispiel einer erfindungsgemäßen Entwicklungseinrichtung 101 in einer dritten Konfiguration 300. In dieser dritten Konfiguration 300 ist der Erstellungsprozessschritt 113 mit der Bezeichnung "V-ECU ready" angewählt. Wenn dieser Erstellungsprozessschritt 113 angewählt ist, wird im zweiten Anzeigebereich 140 eine Konfiguration des Steuergeräteprogramms mit den zugeordneten Basissoftware-Modulen ähnlich zu der Darstellung der Elemente des oben beschriebenen Erstellungsprozessschrittes 112 angezeigt. Beim Ausführen des Erstellungsprozessschrittes 113 werden abschließende Arbeiten an den Basissoftware-Modulen ausgeführt. Beispielsweise wird eine Runtime Environment (RTE) generiert und anschließend eine Implementierung eines Steuergeräteprogramms erzeugt.

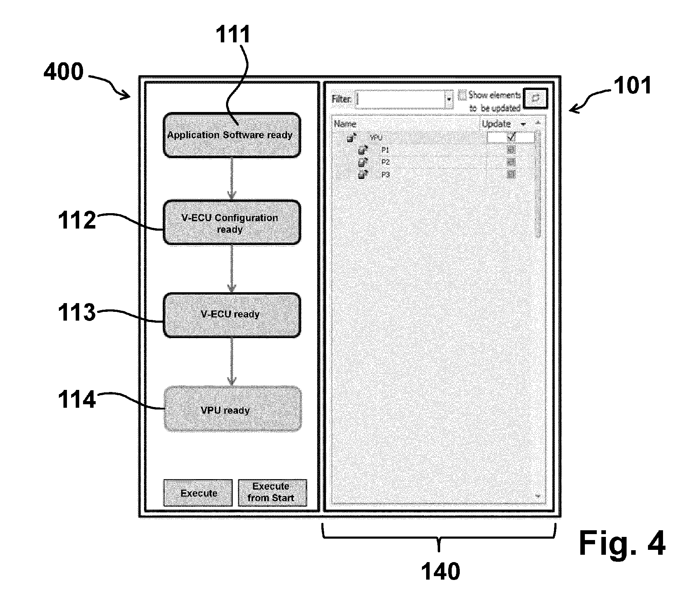

Figur 4 zeigt das in den Figuren 1 bis 3 gezeigte Ausführungsbeispiel einer erfindungsgemäßen Entwicklungseinrichtung in einer Konfiguration 400. In dieser Konfiguration 400 ist der Erstellungsprozessschritt 114 der Bezeichnung "VPU ready" angewählt. Im zweiten Anzeigebereich 114 wird die Konfiguration einer Virtual Processing Unit (VPU) mit den zugeordneten Ports angezeigt. Beim Ausführen des Erstellungsprozessschrittes 114 wird zum einen die VPU konfiguriert und anschließend erstellt. D.h. aus einer erstellten V-ECU-Konfiguration (Fig. 2) und nach dem bereits erfolgten Generieren der BasisSoftware-Module (Fig. 3) wird in dem in Figur 4 gezeigten Erstellungsprozessschritt 114 die VPU, beispielsweise für eine spätere Simulation, erzeugt.

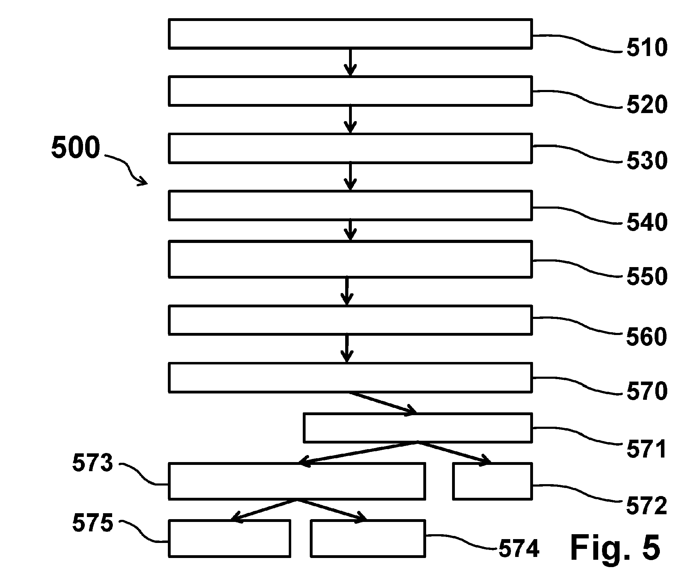

Figur 5 zeigt ein Ausführungsbeispiel eines erfindungsgemäßen Verfahrens 500. Dabei ist das Verfahren 500 schematisch als Ablaufdiagramm gezeigt. Das Verfahren wird mit Bezug auf die in den Figuren 1 bis 4 gezeigte Entwicklungseinrichtung 101 zum Ausführen des erfindungsgemäßen Verfahrens 500 beschrieben. Die in Figur 5 dargestellten und hier im Folgenden beschriebenen Schritte müssen nicht in dieser Reihenfolge ausgeführt werden, sondern können auch in anderer Reihenfolge erfolgen. Insbesondere können Schritte weiter ausgeführt, unterbrochen, aufgenommen oder wiederholt werden, während andere Schritte dazukommen.

In einem Schritt 510 wird ein in Figur 1 gezeigter Erstellungsprozess eines Steuergerätprogramms graphisch wiedergegeben. Die Wiedergabe erfolgt dabei wie in Figur 1 gezeigt in Form eines Ablaufdiagramms in dem ersten Teilbereich 104 der Anzeigeeinheit 102. Das Ablaufdiagramm umfasst einen oder mehrere im Erstellungsprozessverlauf aufeinanderfolgende Erstellungsprozessschritte 111, 112, 113, 114, die mittels einer Bedieneinheit anwählbar sind.

In einem weiteren Verfahrensschritt 520 wird ein in Figur 1 gezeigter graphisch wiedergegebener Erstellungsprozessschritt 111 beispielsweise von einem Anwender mittels einer Bedieneinheit angewählt. In einem Verfahrensschritt 530 wird daraufhin der angewählte Erstellungsprozessschritt 111, insbesondere in optischer Abgrenzung zu einem nicht-angewählten Erstellungsprozessschritt, optisch hervorgehoben.

In einem anderen Verfahrensschritt 540 wird nach dem Anwählen eines Erstellungsprozessschrittes 111 zumindest ein Element 141 eines Modells des Steuergerätprogramms, welches dem angewählten Erstellungsprozessschritt 111 zugeordnet ist, in einem zweiten Teilbereich 140 der Anzeigeeinheit 102 graphisch wiedergegeben.

In einem weiteren Verfahrensschritt 550 kann ein Element 141 beispielsweise mittels der Bedieneinheit ausgewählt werden, so dass das ausgewählte Element 141 in optischer Abgrenzung zu einem nicht-ausgewählten Element 143 in einem Verfahrensschritt 560 optisch hervorgehoben wird.

In einem weiteren Verfahrensschritt 570 kann zumindest ein in Figur 1 gezeigter Erstellungsprozessschritt 111 ausgeführt werden. Das Ausführen 570 erfolgt dabei beispielsweise durch Anwählen 571 eines von der Anzeigeeinheit 102 graphisch wiedergegebenen ersten Ausführfeldes 135, welches als erstes Ausführelement vorgesehen ist. In einem weiteren Verfahrensschritt 572 kann dabei beispielsweise durch Anwählen des ersten Ausführfeldes 135 ein einzelner angewählter Erstellungsprozessschritt 111 ausgeführt werden. In einem weiteren alternativen Verfahrensschritt 573 können beispielsweise durch Anwählen eines zweiten Ausführfeldes 136 mehrere im Erstellungsprozessverlauf aufeinanderfolgende Erstellungsprozessschritte ausgeführt werden. Dabei kann in einem Verfahrensschritt 574 ein angewählter Erstellungsprozessschritt und zumindest ein dem angewählten Erstellungsprozessschritt im Erstellungsprozessverlauf vorgeordneter Erstellungsprozessschritt ausgeführt werden. Alternativ kann in einem Verfahrensschritt 575 ein angewählter Erstellungsprozessschritt und zumindest ein dem angewählten Erstellungsprozessschritt im Erstellungsprozessverlauf nachgeordneter Erstellungsprozessschritt ausgeführt werden.

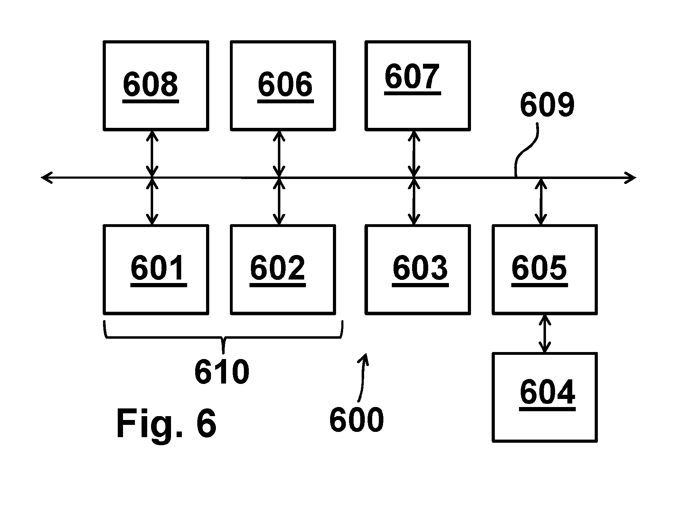

Figur 6 zeigt ein Computersystem 600 (z.B. einen Computerclient, Servercomputer, etc.) umfassend und/oder bestehend aus mehreren Komponenten zum Bereitstellen der oben beschriebenen erfindungsgemäßen Entwicklungseinrichtung. Komponenten wie beispielsweise eine Maus 601, eine Tastatur 602, eine Festplatte 603 (oder ein anderer Speicher mit einem computerlesbaren Datenträger), eine Anzeigeeinheit 604, die mittels einer Anzeigeverbindungseinheit 605 an die anderen Komponenten gekoppelt ist, eine zentrale Recheneinheit 606 (CPU), ein Systemspeicher 607 und eine Eingabe/AusgabeEinheit 608 (I/O-Einheit) sind in Figur 6 gezeigt. Die mittels Verbindungspfeilen gezeigten Verbindungen 609 in Form eines Systembus ermöglichen der zentralen Recheneinheit 606, mit jeder Komponente zu kommunizieren und das Ausführen von Instruktionen aus einem Systemspeicher 607 oder der Festplatte 603 sowie den Austausch von Informationen zwischen den Komponenten zu steuern. Der Systemspeicher 607 und/oder die Festplatte 603 können als computerlesbarer Datenträger vorgesehen sein. Die Eingabe/Ausgabe-Einheit 608 kann ausgebildet sein, um eine Kommunikation des Computersystems 600 mit weiteren Computersystemen, Netzwerkkomponenten oder Steuergeräten zu ermöglichen. Die Maus 601 und die Tastatur 602 bilden eine Bedieneinheit 610 für einen Anwender, mittels derer beispielsweise auf der Anzeigeeinheit 604 graphisch wiedergegebene Elemente angewählt, bearbeitet, etc. werden können. Die Bedieneinheit 610 kann zudem genutzt werden, um eine Instruktion eines auf dem Systemspeicher 607 und/oder der Festplatte 603 gespeicherten Programmcode-Mittels auf dem Computersystem auszuführen bzw. zu starten.

Jegliche Softwarekomponenten oder Funktionen, welche in dieser Anmeldung beschrieben werden, können als Softwarecode implementiert sein, der durch einen Prozessor ausgeführt werden kann unter Verwendung jeder Computersprache wie beispielsweise C, Java, C++ oder Pearl unter Verwendung beispielsweise konventioneller oder Objektorientierter Methoden. Der Softwarecode kann als Serie von Instruktionen oder Kommandos auf einem computerlesbaren Datenträger wie beispielsweise einem Random Access Memory (RAM), oder Read Only Memory (ROM), einem magnetischen Medium wie beispielsweise einer Festplatte oder einem optischen Medium wie beispielsweise einer CD-ROM gespeichert sein.

## Patentansprüche

1. Entwicklungseinrichtung zum Erstellen eines Steuergeräteprogramms, bei welcher ein Steuergeräteprogramm zur Steuerung einer elektronischen Steuerungseinheit in einem Fahrzeug ausgebildet ist,
- mit einer elektronischen Recheneinheit (606), welche ausgebildet ist, das Steuergeräteprogramm zu erzeugen,
- mit einer der elektronischen Recheneinheit (606) zugeordneten Bedieneinheit (610) und
- mit einer der elektronischen Recheneinheit (606) zugeordneten Anzeigeeinheit (102; 604), wobei die Anzeigeeinheit (102; 604) umfasst:
o einen ersten Anzeigebereich (104), in dem die Anzeigeeinheit (102; 604) einen Erstellungsprozess (105) des Steuergeräteprogramms in Form eines Ablaufdiagramms (106) graphisch wiedergibt, wobei das Ablaufdiagramm (106) einen oder mehrere im Erstellungsprozess (105) aufeinanderfolgende Erstellungsprozessschritte (111; 112; 113; 114) umfasst, welche mittels der Bedieneinheit (610) anwählbar sind, und
o einen zweiten Anzeigebereich (140), in dem die Anzeigeeinheit (102; 604) zumindest ein Element (141; 143; 146) eines Modells des Steuergeräteprogramms graphisch wiedergibt, welches einem angewählten Erstellungsprozessschritt (111; 112; 113; 114) zugeordnet ist,
- wobei zumindest ein Erstellungsprozessschritt (111; 112; 113; 114) mittels der Entwicklungseinrichtung (101) ausführbar ist.

2. Entwicklungseinrichtung nach einem der vorstehenden Ansprüche,
bei welcher ein Element (141), insbesondere ein ausgewähltes Element (141), welches einem Erstellungsprozessschritt (111) zugeordnet ist, beim Ausführen des Erstellungsprozessschrittes (111) geändert, insbesondere aktualisiert, wird.

3. Entwicklungseinrichtung nach einem der vorstehenden Ansprüche,
bei welcher ein angewählter Erstellungsprozessschritt (111) optisch hervorgehoben wird, insbesondere in optischer Abgrenzung zu einem nicht-angewählten Erstellungsprozessschritt (112; 113; 114).

4. Entwicklungseinrichtung nach einem der vorstehenden Ansprüche,
bei welcher ein Element (141) auswählbar ist und
das ausgewählte Element (141) optisch hervorgehoben wird, insbesondere in Abgrenzung zu einem nicht-ausgewählten Element (143).

5. Entwicklungseinrichtung nach einem der vorstehenden Ansprüche,
bei welcher das Element (141; 143; 146) eine Applikations-Softwarekomponente und/oder ein Basissoftware-Modul und/oder VPU umfasst.

6. Entwicklungseinrichtung nach einem der vorstehenden Ansprüche,
bei welcher einem Erstellungsprozessschritt (111) ein Kontextmenü (121) mit einer oder mehreren anwählbaren Optionen (131) zur Bearbeitung des Erstellungsprozessschrittes (111) zugeordnet ist, wobei das Kontextmenü (121) vorzugsweise von derAnzeigeeinheit (102; 604) optisch wiedergegeben wird.

7. Entwicklungseinrichtung nach einem der vorstehenden Ansprüche,
bei welcher einem Element (146) ein Kontextmenü (145) mit einer oder mehreren anwählbaren Optionen (147) zur Bearbeitung des Elements (146) zugeordnet ist, wobei das Kontextmenü (145) vorzugsweise von der Anzeigeeinheit optisch wiedergegeben wird.

8. Entwicklungseinrichtung nach einem der vorstehenden Ansprüche,
bei welcher ein Element (141; 143; 146), insbesondere mittels der Bedieneinheit (610), bearbeitbar ist.

9. Entwicklungseinrichtung nach einem der vorstehenden Ansprüche,
bei welcher ein einzelner Erstellungsprozessschritt (111; 112; 113; 114) ausführbar ist.

10. Entwicklungseinrichtung nach dem vorstehenden Anspruch,
mit einem anwählbaren ersten Ausführelement (135), insbesondere einem von der Anzeigeeinheit (102, 604) optisch wiedergegebenen ersten Ausführfeld, wobei ein Anwählen des ersten Ausführelements (135) bewirkt, dass ein angewählter Erstellungsprozessschritt (111; 112; 113; 114) ausgeführt wird.

11. Entwicklungseinrichtung nach einem der vorstehenden Ansprüche,
bei welcher mehrere im Erstellungsprozessverlauf aufeinanderfolgende Erstellungsprozessschritte (111; 112; 113; 114) ausführbar sind.

12. Entwicklungseinrichtung nach dem vorstehenden Anspruch,
- mit einem anwählbaren zweiten Ausführelement (136), insbesondere einem von der Anzeigeeinheit optisch wiedergegebenen zweiten Ausführfeld, wobei ein Anwählen des zweiten Ausführelements (136) bewirkt, dass
○ der angewählte Erstellungsprozessschritt (114) und zumindest ein Erstellungsprozessschritt (111; 112; 113), welcher dem angewählten Erstellungsprozessschritt (114) im Erstellungsprozessverlauf vorgeordnet ist, ausgeführt werden oder
○ der angewählte Erstellungsprozessschritt (111) und zumindest ein Erstellungsprozessschritt (112; 113; 114), welcher dem angewählten Erstellungsprozessschritt (111) im Erstellungsprozessverlauf nachgeordnet ist, ausgeführt werden.

13. Entwicklungseinrichtung nach einem der vorstehenden Ansprüche,
bei welcher ein Erstellungsprozessschritt (111; 112; 113; 114) beim Ausführen optisch hervorgehoben wird, insbesondere in optischer Abgrenzung zu einem nicht-ausgeführten Erstellungsprozessschritt.

14. Verfahren zum Erstellen eines Steuergeräteprogramms, bei dem das Steuergeräteprogramm zur Steuerung einer elektronischen Steuerungseinheit in einem Fahrzeug ausgebildet ist, mit den Schritten:
- graphisches Wiedergeben (510) eines Erstellungsprozesses (105) eines Steuergeräteprogramms, wobei der Erstellungsprozess (105) in Form eines Ablaufdiagramms (106) in einem ersten Teilbereich (104) einer Anzeigeeinheit (102; 602) graphisch wiedergegeben wird,
wobei das Ablaufdiagramm (106) einen oder mehrere im Erstellungsprozess (105) aufeinanderfolgende Erstellungsprozessschritte (111; 112; 113; 114) umfasst, die mittels einer Bedieneinheit (610) anwählbar sind,
- Anwählen (520) eines graphisch wiedergegebenen Erstellungsprozessschrittes (111; 112; 113; 114),
- graphisches Wiedergeben (540) zumindest eines Elements (141; 143; 146) eines Modells des Steuergeräteprogramms, welches dem angewählten Erstellungsprozessschritt (111; 112; 113; 114) zugeordnet ist, in einem zweiten Teilbereich (140) der Anzeigeeinheit (102; 604) und
- Ausführen (570) zumindest eines Erstellungsprozessschrittes (111; 112; 113; 114).

15. Verfahren nach dem vorstehenden Anspruch, mit dem Schritt:
Aktualisieren (580) eines ausgewählten, einem Erstellungsprozessschritt (111; 112; 113; 114) zugeordneten Elements (141) beim Ausführen des Erstellungsprozessschrittes (111; 112; 113; 114).

16. Verfahren nach einem der vorstehenden Ansprüche 14 oder 15, mit dem Schritt:
optisches Hervorheben (530) eines angewählten Erstellungsprozessschrittes (111; 112; 113; 114), insbesondere in optischer Abgrenzung zu einem nicht-angewählten Erstellungsprozessschritt.

17. Verfahren nach einem der vorstehenden Ansprüche 14-16, mit den Schritten:
- Auswählen (550) eines Elements (141), insbesondere mittels der Bedieneinheit (610), und
- optisches Hervorheben (560) eines ausgewählten Elements (141), insbesondere in optischer Abgrenzung zu einem nicht-ausgewählten Element (143).

18. Verfahren nach einem der vorstehenden Ansprüche 14-17, mit dem Schritt:
Ausführen (572) eines einzelnen angewählten Erstellungsprozessschrittes (111; 112; 113; 114).

19. Verfahren nach dem vorstehenden Anspruch,
bei dem das Ausführen (570) erfolgt durch Anwählen (571) eines ersten Ausführelements (135), insbesondere eines von der Anzeigeeinheit graphisch wiedergegebenen ersten Ausführfeldes.

20. Verfahren nach einem der vorstehenden Ansprüche 14-19, mit dem Schritt:
- Ausführen (573) mehrerer im Erstellungsprozessverlauf aufeinanderfolgender Erstellungsprozessschritte (111; 112; 113; 114),
○ wobei ein angewählter Erstellungsprozessschritt (114) und zumindest ein dem angewählten Erstellungsprozessschritt (114) im Erstellungsprozessverlauf vorgeordneter Erstellungsprozessschritt (111; 112; 113) ausgeführt wird (574) oder
○ wobei ein angewählter Erstellungsprozessschritt (111) und zumindest ein dem angewählten Erstellungsprozessschritt (111) im Erstellungsprozessverlauf nachgeordneter Erstellungsprozessschritt (112; 113; 114) ausgeführt wird (575).
